# EUROPÄISCHE PATENTANMELDUNG

(11) **EP 1 769 986 A2**
(43) Veröffentlichungstag der Anmeldung: **04.04.2007**
(21) Anmeldenummer: 06120244.6
(22) Anmeldetag: 07.09.2006
(51) Int. Cl.: B60S 1/34

(54) **Scheibenwischvorrichtung, insbesondere für ein Kraftfahrzeug**

(30) Priorität: 29.09.2005 DE 102005046653
(71) Anmelder: ROBERT BOSCH GMBH, 70442 Stuttgart (DE)
(72) Erfinder: Kraus, Achim, 77815 Buehl (DE); Eschenbrenner, Nicolas, 67100 Strasbourg (FR)

(57) **Zusammenfassung**

Es wird eine Scheibenwischvorrichtung (10), insbesondere für eine Scheibe (50) eines Kraftfahrzeugs vorgeschlagen. Diese umfasst einen Wischerarm (14), der mindestens ein freies Ende (16) mit einem kurzen Trägerelement (26) aufweist, an dem ein Wischblatt befestigbar ist. Der Wischerarm (14) weist ein erstes Führungselement (22) und ein zweites Führungselement (30) auf, die am Trägerelement (26) befestigt sind. Das erste Führungselement wird durch ein Antriebsmittel (12) in eine pendelnde Bewegung in einer Ebene (E) versetzt. Zur Verbindung der Führungselement(22, 30) sind Gelenke (24, 34) vorgesehen, wovon eines als Zylinderlager ausgebildet ist. Das Zylinderlager schließt erfindungsgemäß mit der Ebene (E), die durch die pendelnde Bewegung des ersten Führungselements (22) gebildet ist, einen Winkel ein, der kleiner als 90 Grad beträgt.

## Beschreibung

### Stand der Technik

Die Erfindung betrifft eine Scheibenwischvorrichtung, insbesondere für ein Kraftfahrzeug, nach Gattung des unabhängigen Anspruchs.

Es sind schon zahlreiche Scheibenwischvorrichtungen, beispielsweise aus der DE-A-3 842 585 bekannt, die einen Wischerarm mit einem freien Ende aufweisen, an dem ein kurzes Trägerelement vorgesehen ist, um ein Wischblatt zu befestigen. Derartige Wischerarme weisen ein langes erstes Führungselement aus, das entlang seiner Längserstreckung zwei Enden aufweist und an einem seiner Enden mit dem kurzen Trägerelement durch ein erstes Gelenk verbunden ist und an seinem anderen Ende durch einen Elektromotor als Antriebsmittel in eine pendelnde Bewegung in einer Ebene E versetzbar ist. Weiterhin ist bei derartigen Scheibenwischvorrichtungen ein zweites Führungselement vorgesehen, das ebenso wie das erste Führungselement entlang seiner Längserstreckung zwei Enden aufweist, wobei das eine Ende mit dem kurzen Trägerelement durch ein zweites Gelenk verbunden ist und an seinem anderen Ende blind gelagert ist. Erstes und zweites Gelenk sind hierbei als Zylinderlager ausgebildet.

Mit derartigen Scheibenwischvorrichtungen lassen sich so genannte Panoramascheiben wischen, wobei nur ein einziger Wischerarm mit einem einzigen Wischerblatt benötigt wird. Solche Wischerarme werden auch als Pantograph-Wischarm bezeichnet. Das Wischblatt kann hierbei durch die Führungselemente derart geführt werden, dass es in den Umkehrlagen, an den beiden seitlichen Rändern der Scheibe, jeweils parallel zu jeweiligen Rand, an der A-Säule des Kraftfahrzeugs, angeordnet ist.

Zur Verbesserung der Rundumsicht im Kraftfahrzeug sind vermehrt Scheiben mit einer relativ großen Krümmung der Oberfläche gefordert, wobei eine sehr hohe Wischqualität gewährleistet sein muss und darüber hinaus ein sehr großes Wischfeld der Scheibenwischvorrichtung erzielt werden muß.

### Offenbarung der Erfindung

Die erfindungsgemäße Scheibenwischvorrichtung mit den Merkmalen des Hauptanspruchs hat den Vorteil, dass das Zylinderlager eine Drehachse aufweist, die gegenüber einer auf der Ebene, in der die Führungselemente pendeln, stehenden Senkrechten geneigt ist. Auf diese Weise ist es möglich, auch Kraftfahrzeugscheiben mit sehr hohen Oberflächenkrümmungen in höchster Qualität zu wischen und damit für eine optimale Sicht des Fahrzeugführers zu sorgen.

Durch die in den Unteransprüchen aufgeführten Maßnahmen ergeben sich vorteilhafte Weiterbildungen und Verbesserungen der im Hauptanspruch angegebenen Merkmale.

Hierbei ist es vorteilhaft, wenn der Neigungswinkel der Drehachse zwischen größer 0 Grad und 10 Grad, insbesondere zwischen 5 Grad und 9 Grad, vorzugsweise etwa 7 Grad beträgt und insbesondere senkrecht zur Längserstreckung des Wischerarms verläuft.

Besonders vorteilhaft ist es hierbei, wenn eines der beiden Gelenke als Kugelgelenk ausgebildet ist, da auf diese Weise Fertigungstoleranzen ausgeglichen werden können.

Eine besonders stabile Scheibenwischvorrichtung wird dadurch erzielt, dass das erste oder zweite Führungselement eine lange Stange mit einer Breite zwischen 5 und 15 mm oder einer Dicke zwischen 1 und 5 mm oder einer Länge von mindestens 30 cm aufweist.

Idealerweise sind durch das Pendeln des Wischerarms im Betrieb eine erste Umkehrlage und eine zweite Umkehrlage definiert und die Längen der Führungselemente derart gewählt, dass ein am Trägerelement angelenktes Wischblatt in den beiden Umkehrlagen im Wesentlichen parallel zum Rand der zu wischenden Scheibe zu liegen kommt. Dadurch wird ein sehr großes Wischfeld erzielt.

In einer besonders einfachen und kostengünstigen Variante weist mindestens eines der Führungselemente im Wesentlichen zwei Teile auf, die gelenkig miteinander verbunden sind.

Hierbei ist es von Vorteil, wenn die zwei Teile mit einem Federmittel verbunden sind und zwar derart, dass das freie Ende des Wischerarms in Richtung der Scheibe gedrückt wird.

Eine besonders einfache Montage ergibt sich dadurch, dass das Wischblatt im Wesentlichen senkrecht oder parallel zum Trägerelement montierbar ist.

### Zeichnungen

Ein Ausführungsbeispiel der Erfindung ist in den Zeichnungen dargestellt und in der nachfolgenden Beschreibung näher erläutert. Es zeigen:
- Figur 1: eine erfindungsgemäße Scheibenwischvorrichtung in der unteren Umkehrlage in einer schematischen Darstellung,
- Figur 2: eine erfindungsgemäße Scheibenwischvorrichtung in der oberen Umkehrlage in einer schematischen Darstellung und
- Figur 3: einen Schnitt durch ein Trägerelement einer erfindungsgemäßen Scheibenwischvorrichtung.

### Beschreibung des Ausführungsbeispiels

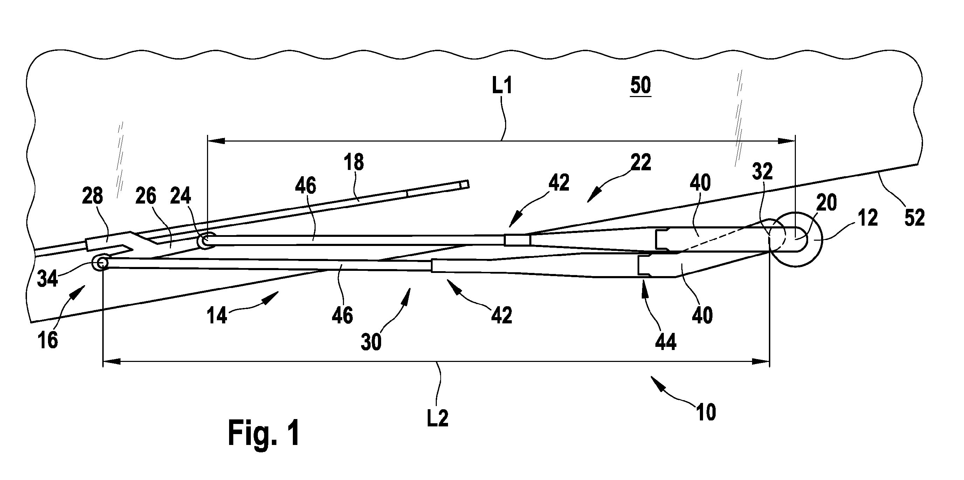

In Figur 1 ist eine erfindungsgemäße Scheibenwischvorrichtung 10 in einer schematischen Darstellung gezeigt. Diese umfasst im Wesentlichen einen elektronisch reversierbaren Motor als Antriebsmittel 12 und einem Wischerarm 14, der ein freies Ende 16 aufweist, an dem ein Wischblatt 18 befestigbar ist. Der Wischerarm 14 ist über eine Wischerwelle 20 mit dem Antriebsmittel 12 verbunden. Im Betrieb versetzt der Motor 12 den Wischerarm 14 in eine pendelnde Bewegung zwischen einer ersten Umkehrlage U1 und einer zweiten Umkehrlage U2 auf einer Scheibe 50, wodurch eine Ebene E aufgespannt wird.

Der Wischerarm 14 selbst umfasst ein langes, erstes Führungselement 22, welches an einem Ende seiner Längserstreckung an der Wischerwelle 20 des Antriebsmittels 12 befestigt ist. An seinem anderen Ende ist das erste Führungselement 22 durch ein erstes Gelenk 24 mit einem kurzen Trägerelement 26 verbunden, an dem ein Befestigungselement 28 zur Befestigung des Wischblatts 18 vorgesehen ist.

Weiterhin umfasst der Wischerarm 14 ein zweites Führungselement 30, dessen Länge von der selben Größenordnung ist, wie die Länge des ersten Führungselements 22. An einem Ende seiner Längserstreckung ist das Führungselement 30 an einer Blindlagerwelle 32 blind, also antriebslos gelagert. Die Blindlagerwelle 32 ist hierbei nahe and er Wischerwelle 20 angeordnet und verläuft im Wesentlichen achsenparallel zu dieser. Am anderen Ende des Führungselements 30, welches im Bereich des freien Endes 16 des Wischerarms 14 vorgesehen ist, ist dieses über ein zweites Gelenk 34 am Trägerelement 26 befestigt. Die Befestigungspunkte bzw. das erste Gelenk 24 und das zweite Gelenk 34 sind hierbei derart beabstandet, dass sich das Trägerelement 26 während der Pendelbewegung des Wischerarms 14 um eine eigene Achse dreht, die etwa senkrecht auf der Ebene E der Pendelbewegung steht. Das erste Gelenk 24 ist hierbei als einfaches Zylinderlager ausgebildet. Die Drehachse dieses Zylinderlagers ist jedoch um 8 Grad gegenüber einer zur Ebene E senkrechten Achse geneigt. Damit schließt die Drehachse des Zylinderlagers 24 mit der Ebene E einen Winkel von 82 Grad ein.

In einer Variation der Erfindung kann auch das erste Gelenk 24 auch als Kugelgelenk und das zweite Gelenk 34 als Zylinderlager ausgebildet sein. Erfindungsgemäß ist dann jeweils die Drehachse des Zylinderlagers wie oben beschrieben geneigt.

Die Länge L1 des ersten Führungselements 22 und die Länge L2 des zweiten Führungselements 30 sind hierbei derart gewählt, dass das Wischblatt 18, wie hier zu sehen, in der hier gezeigten unteren Umkehrlage U1 etwa waagerecht, d. h. parallel zu einem unteren Rand 52 der Scheibe 50 des Kraftfahrzeugs. Sowohl das erste Führungselement 22 wie das zweite Führungselement 30 sind hierbei aus jeweils einem ersten Teil 40, das zur Befestigung an der jeweiligen Welle, 20, 32 dient und einem zweiten Teil 42 gebildet, das gelenkig mit dem ersten Teil 40 verbunden ist und am anderen Ende seiner Längserstreckung in dem jeweiligen Gelenk 24, 34 mündet. Die gelenkige Verbindung zwischen dem ersten Teil 40 und dem zweiten Teil 42 ist durch ein Klappgelenk 44 gebildet und wird durch eine, der Übersichtlichkeit halber hier nicht gezeichnete Feder derart unterstützt, dass das freie Ende 16 des Wischerarms 14 auf die Scheibe 50 gedrückt wird. Zum Wechsel des Wischblatts 18 kann das freie Ende 16 des Wischerarms 14 daher von der Scheibe 50 weg geklappt werden, sodass der Austausch des Wischblatts 18 erleichtert wird.

Das zweite Teil 42 weist hierbei eine lange Stange 46 auf, die etwa 8 mm breit und etwa 2 mm dick ist. Die Länge L1 des gesamten ersten Führungselements 22, sowie die Länge L2 des gesamten zweiten Führungselements 30 beträgt etwas mehr als 20 cm, insbesondere etwa 30 cm.

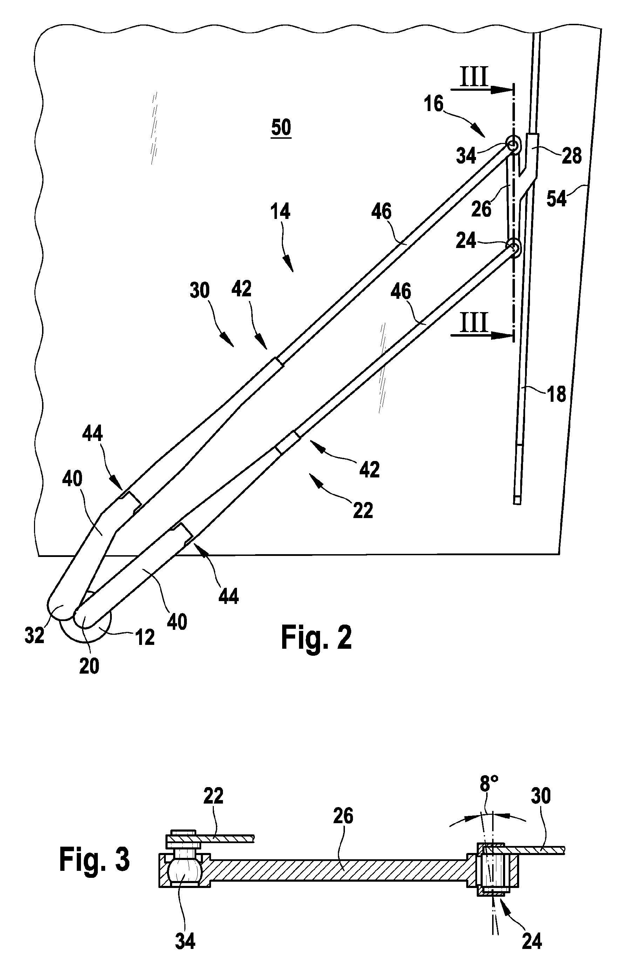

In Figur 2 ist die erfindungsgemäße Scheibenwischvorrichtung 10 in der zweiten Umkehrlage U2 gezeigt. Das Wischblatt 18 ist hierbei im Wesentlichen parallel zu einem seitlichen Rand 54 der Scheibe 50, im Bereich der A-Säule des Kraftfahrzeugs, angeordnet. Die Bezugszeichen sind hier identisch wie in Figur 1 gewählt. Der Motor 12 treibt das erste Führungselement 22 an, welches durch die Wischerwelle 20 mit dem Motor 12 verbunden ist. Auf der nicht angetriebenen Blindlagerwelle 32 ist das zweite Führungselement 30 befestigt. Am freien, also dem Motor 12 abgewandten Ende des Wischerarms 14 weist dieser das Trägerelement 26 auf, welches durch sein Befestigungselement 28 mit dem Wischblatt 18 verbunden ist. Das Wischblatt 18 ist hierbei parallel zur Längserstreckung des Trägerelements 26 und damit auch parallel zu einer Verbindungslinie zwischen dem ersten Gelenk 24 und dem zweiten Gelenk 34 des Trägerelements 26 angeordnet.

In Figur 3 ist ein Schnitt durch das Trägerelement 26 mit dem ersten Gelenk 24 und dem zweiten Gelenk 34 gezeigt. Das Trägerelement 26 ist von im Wesentlichen länglicher Gestalt und weist daher zwei Enden auf. An einem Ende ist das erste Gelenk 24 befestigt, welches als Zylinderlager ausgebildet ist. Die Drehachse des Zylinderlagers ist hierbei um etwa 8 Grad gegenüber der Pendelebene E der Führungselemente 22, 30 geneigt. Die Neigung erfolgt dabei in einer weiteren Ebene, die auf der Ebene E etwa senkrecht steht und das erste und zweite Gelenk 24, 34 schneidet. Damit ergibt sich auch eine Neigung gegenüber einer senkrechten, die durch die Ebene des Trägerelements 26 gebildet ist sowie eine Neigung senkrecht zur Längserstreckung des Wischerarms 14. Das erste Führungselement 22 ist darüber hinaus durch das Kugelgelenk 34 mit dem Trägerelement 26 verbunden.

Durch diese Konstruktion lässt sich eine Vielzahl von Anstellwinkeln des Wischblatts 18 gegenüber der Scheibe 50 realisieren.

Üblicherweise sind die Führungselemente 22, 30 aus Metall, insbesondere als Blechbiegeteil ausgebildet. In einer Variation sind jedoch auch Ausführungen aus Kunststoff möglich. Als Antriebsmittel 12 ist ein Elektromotor, der elektronisch gesteuert ist und seine Drehrichtung umkehren kann, also ein so genannter Reversiermotor, einsetzbar. Das Trägerelement 26 kann sowohl aus Kunststoff wie auch aus Metall ausgebildet sein. Aus Kunststoff kann dieses in einem einfachen Spritzgussverfahren hergestellt werden, indem auch die entsprechenden Lagerbüchsen für das erste Gelenk 24 und/ oder das zweite Gelenk 34 eingespritzt werden können, die durch geeignete Hinterschneidungen arretiert sind.

## Patentansprüche

1. Scheibenwischvorrichtung (10), insbesondere für eine Scheibe (50) eines Kraftfahrzeugs, mit einem Wischerarm (14) der mindestens ein freies Ende (16) mit einem kurzen Trägerelement (26) aufweist, an dem ein Wischblatt (18) befestigbar ist und einem langen, ersten Führungselement (22), das entlang seiner Längserstreckung zwei Enden aufweist und an seinem einen Ende mit dem kurzen Trägerelement (26) durch ein erstes Gelenk (24) verbunden ist und mit seinem anderen Ende durch ein Antriebsmittel (12) in eine pendelnde Bewegung in einer Ebene (E) versetzbar ist und einem langen, zweiten Führungselement (30), das entlang seiner Längserstreckung zwei Enden aufweist und an seinem einen Ende mit dem kurzen Trägerelement (26) durch ein zweites Gelenk (34) verbunden ist und an seinem anderen Ende blind gelagert, wobei das erste Gelenk (24) oder das zweite Gelenk (34) als Zylinderlager ausgebildet ist, **dadurch gekennzeichnet, dass** das Zylinderlager (24, 34) eine Drehachse aufweist, die gegenüber einer auf der Ebene (E) stehenden Senkrechten um einen Neigungswinkel geneigt ist.

2. Scheibenwischvorrichtung (10) nach Anspruch 1, **dadurch gekennzeichnet, dass** der Neigungswinkel zwischen größer 0 Grad und 10 Grad, insbesondere zwischen 1 Grad und 9 Grad, vorzugsweise zwischen 5 Grad und 8 Grad, Idealerweise 7 Grad beträgt und insbesondere senkrecht zur Längserstreckung des Wischerarms verläuft.

3. Scheibenwischvorrichtung (10) nach einem der vorhergehenden Ansprüche, **dadurch gekennzeichnet, dass** das erste Führungselement (22) und/oder das zweite Führungselement (30) eine lange Stange (46) aufweisen die eine Breite (B) aufweist, die zwischen 5 mm und 15 mm beträgt und/oder eine Dicke (D) aufweist, die zwischen 1mm und 5mm beträgt und/oder die Länge (L1, L2) des Führungselementes (22, 30) mindestens 30 cm beträgt.

4. Scheibenwischvorrichtung (10) nach einem der vorhergehenden Ansprüche, **dadurch gekennzeichnet, dass** im Betrieb durch das pendeln des Wischerarms (14) eine erste Umkehrlage (U1) und eine zweite Umkehrlage (U2) definiert sind und die Länge (L1) des ersten Führungselements (22) und die Länge (L2) des zweiten Führungselements (30) derart gewählt sind, dass ein am Trägerelement (26) angelenktes Wischblatt (18) in der ersten und zweiten Umkehrlage (U1, U2) im wesentlichen parallel zum Rand (52) der zu wischenden Scheibe (50) zu liegen kommt.

5. Scheibenwischvorrichtung (10) nach einem der vorhergehenden Ansprüche, **dadurch gekennzeichnet, dass** mindestens eines der Führungselemente (22, 30), vorzugsweise beide Führungselemente (22, 30), im wesentlichen ein erstes Teil (40) und ein zweites Teil (42) umfassen, die gelenkig miteinander verbunden sind.

6. Scheibenwischvorrichtung (10) nach Anspruch 5, **dadurch gekennzeichnet, dass** die zwei Teile (40, 42) derart mit einem Federmittel verbunden sind, dass das freie Ende des Wischerarms (14) in Richtung der Scheibe (50) gedrückt wird.

7. Scheibenwischvorrichtung (10) nach einem der vorhergehenden Ansprüche, **dadurch gekennzeichnet, dass** das Wischblatt (18) im Wesentlichen senkrecht oder parallel zum Trägerelement (26) montierbar ist.
